# EUROPÄISCHE PATENTSCHRIFT

(11) **EP 2 259 405 B1**
(45) Veröffentlichungstag und Bekanntmachung des Hinweises auf die Patenterteilung: **14.01.2015**
(21) Anmeldenummer: 10180513.3
(22) Anmeldetag: 30.06.2001
(51) Int. Cl.: H02J 7/32, H02J 9/06

(54) **Notstromversorgungseinrichtung**
Emergency power system
Alimentation de secours

(30) Priorität: 07.07.2000 DE 10033029
(43) Veröffentlichungstag der Anmeldung: 08.12.2010
(62) Teilanmeldung aus: 06123062.9
(73) Patentinhaber: Wobben Properties GmbH, 26605 Aurich (DE)
(72) Erfinder: Wobben, Aloys, 26607 Aurich (DE)
(74) Vertreter: Eisenführ Speiser

(56) Entgegenhaltungen:
- WO-A1-00/01946
- WO-A1-00/09885
- US-A- 5 907 192
- DIETRICH T: "KONDENSATOR-POWER FUER INNOVATIVE APPLIKATIONEN MIT 500 000 LADE-/ENTLADEVORGAENGEN UND ENTLADESTROEMEN BIS ZU 400 A LANGFRISTIG NUTZBAR", THE EMBO JOURNAL, IRL PRESS LIMITED, DE, Bd. 48, Nr. 9, 4. Mai 1999 (1999-05-04), Seiten 72-77, XP000902715, ISSN: 0013-5658

## Beschreibung

Es ist bekannt, bei Windenergieanlagen für bestimmte Teile eine Notstromversorgung mittels Akkumulatoren, insbesondere Blei-Akkumulatoren vorzusehen, damit für den Fall eines Stromausfalls die Windenergieanlage so in Position gebracht werden kann, dass keine Schäden an der Windenergieanlage eintreten. Blei-Akkumulatoren werden beispielsweise für die Notstromversorgung der Blattverstellung verwendet, so dass für den Fall eines Stromausfalls (z.B. durch einen Kurzschluss im Versorgungssystem) die Blätter der Windenergieanlage so verstellt werden können, dass der gesamte Windenergieanlagen-Rotor zum Stillstand gebracht wird und keinen wesentlichen Antrieb aus der Windenergie mehr erfährt. Auch kann es notwendig sein, die Windenergieanlagen-Gondel "aus dem Wind" zu drehen, wozu ebenfalls Blei-Akkumulatoren als Notstromversorgungseinrichtung verwendet werden können.

Der Nachteil von Blei-Akkumulatoren liegt aber darin, dass sie relativ schwer sind, sehr viel Platz benötigen und dass Blei-Akkumulatoren nicht unbegrenzt oft auf- und entladen werden können. Auch nehmen die Auflade- und Entladeeigenschaften der Blei-Akkumulatoren mit der Zeit ab, und außerdem benötigen Akkumulatorenspeicher eine relativ aufwendige Wartung, so dass sie die Kosten einer Windenergieanlage bzw. deren Betrieb erhöhen. Aus Elektrizitätswirtschaft, Jg. 1994 (1995), Heft 14, Seiten 842 bis 845 sind verschiedene Stromspeicher für die Energieversorgung bekannt. Hierbei werden auch elektrische Speicher vorgestellt, die in Kraftwerken, abgesehen von ihrer Funktion als Notstromversorgung für den Lastausgleich und die Bereitstellung von Sekundenreserven eingesetzt werden, womit die Ausnutzungsdauer der Energieerzeugungsanlagen verbessert wird. Erwähnt werden in diesem Zusammenhang auch Doppelschichtkondensatoren.

Aus DE 196 51 364 A1 ist eine Vorrichtung zur Verbesserung der Netzverträglichkeit von Windkraftanlagen mit Asynchrongeneratoren bekannt, wobei dem öffentlichen Versorgungsnetz dabei eine elektronisch gesteuerte Einrichtung parallel geschaltet ist, die einen Energie-Zwischenspeicher beinhaltet, wobei als eine Möglichkeit des Zwischenspeichers auch eine Kapazität erwähnt ist.

Aufgabe der Erfindung ist es, die vorgenannten Nachteile zu vermeiden.

Die Aufgabe wird durch die Erfindung mit den Merkmalen nach Anspruch 1 gelöst. Vorteilhafte Weiterbildungen sind in den Unteransprüchen beschrieben.

Die Erfindung schlägt im Wesentlichen vor, statt eines Akkumulators nunmehr einen Kondensator, insbesondere einen Kondensator vom "UltraCap"-Typ, für verschiedene Anwendungen bei einer Windenergieanlage einzusetzen.

Der besondere Vorteil von Kondensatoren liegt in der Wartungsfreiheit und der unbegrenzten Menge an Lade- und Entladungsvorgängen im Gegensatz zu herkömmlichen Akkumulatoren bzw. Batterien.

Besonders vorteilhaft geeignet ist ein Kondensator, wie er von der Firma Siemens Matsushita Components GmbH Co. KG unter der Bezeichnung "UltraCap" sowie der Artikel-Nr. B48710-A0283-Q035 hergestellt wird. Dieser Kondensator verfügt über folgende technische Daten:

| | | |
|---|---|---|
| (Nenn-)Kapazität CR (DCC⁽¹⁾, 25°C): | 2,8 F | |
| Kapazitätstoleranz: | -10...+30 % | |
| (Nenn-)Spannung UR | 75 V | |
| Leistung⁽²⁾ | 578 W/kg | 756 W/l |
| Max. Lade-/Entladestrom I_{c} (25°C) | 25 A | |
| Gespeicherte Energie (bei U_{R}) | 7875 J | |
| Spezifische Energie (bei U_{R} | 1,09 Wh/kg | 1,43 Wh/l |
| Stoß-Spannung | 88 V | |
| Max. Leckstrom I_{LC} (12h, 25°C) | 4 mA | |
| Max. Serienwiderstand ESR^{DC}(DCC, 25°C) | 800 mΩ | |
| Max. Serienwiderstand ESR^{HF}(1kHz, 25°C) | 480 mΩ | |
| Gewicht | 2 kg | |
| Volumen | 1,5 I | |
| Betriebstemperatur | -25...+65 °C | |
| Speichertemperatur | -35...+65 °C | |
| Lebensdauer | 180000 h | |
| (25°C, UR) | | |
| Höhe x Breite x Länge | 70 x 70 x 312 mm | |

| | | |
|---|---|---|
| (1) DCC: Entladung mit konstantem Strom (2) Entladung von UR nach UR/2 mit IC=25A | | |

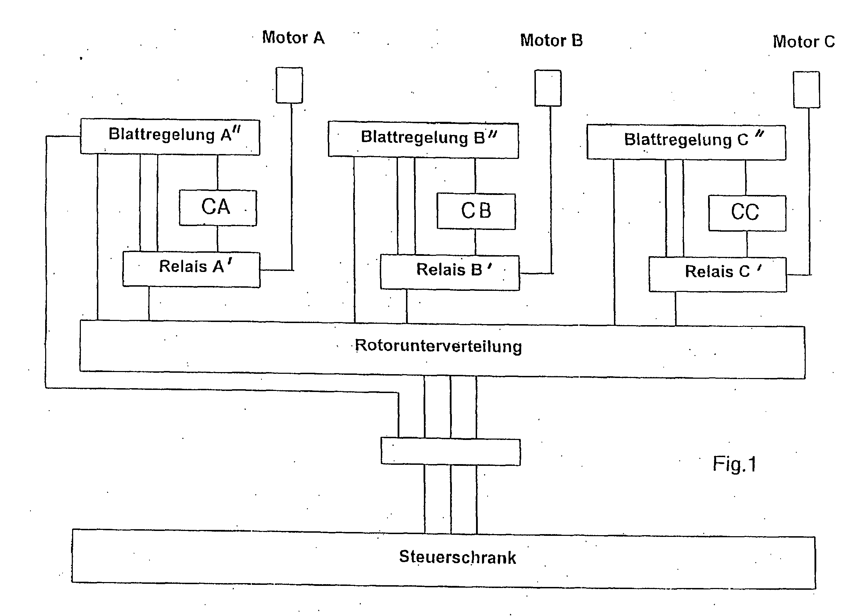

Fig. 1 zeigt das Prinzip-Bild der Rotorblattverstellung einer Windenergieanlage. Da der Rotor der Windenergieanlage über drei Rotorblätter verfügt und jedes einzelne Rotorblatt auf einen gewünschten Anstellwinkel eingestellt (eingeregelt) werden kann, ist für jedes einzelne Rotorblatt ein Verstellmotor A, B oder C vorgesehen, welcher über ein Relais A', B' oder C' angesteuert wird. Die Blattregelungseinrichtung A", B" oder C" erhält von einer Steuereinrichtung (Steuerschrank) ihre Werte und muss im Fall einer Notabschaltung, beispielsweise verursacht durch einen Kurzschluss in der Windenergieanlage oder deren Stromversorgungseinrichtung noch eine Blattverstellung vornehmen, so dass die jeweiligen Rotorblätter des Rotors aus dem Wind "gedreht" werden, d.h. dass sie keinen Antrieb mehr auf den Rotor erzeugen. Die hierfür benötigte Energie wird durch die Kondensatoren CA, CB und CC bereitgestellt. Zum Laden dieser Kondensatoren im Normalbetrieb sind diese mit einem Anschluss (nicht dargestellt) versehen, so dass die (aufgeladenen) Kondensatoren stets ausreichend Energie bereitstellen, um die Rotorblätter auf einen gewünschten Anstellwinkel einzustellen, falls dieses notwendig ist. Da die Kondensatoren in ihren Ausführungen sehr klein sind, können sie unmittelbar an den Verstellmotoren positioniert werden und auch von diesen gehalten werden. Es ist aber auch möglich, alle Kondensatoren zusammen in einer eigenen Aufnahme zu positionieren und im Bedarfsfall als Notstromversorgungseinrichtung für die Rotorblattverstellung oder für andere Teile der Windenergieanlage (z.B. Alarmbeleuchtung, Gefahrenfeuer) im Bedarfsfall zuzuschalten.

Es ist vorteilhaft, statt eines einzelnen Kondensators mehrere Kondensatoren in Parallelschaltung vorzusehen, so dass stets eine ausreichende Notstromkapazität zur Verfügung gestellt werden kann.

## Patentansprüche

1. Verwendung eines Kondensatorspeichers als Notstromversorgungseinheit einer Windenergienanlage die drei Rotorblätter aufweist,
wobei mittels der Notstromversorgungseinheit die Rotorblätter der Windenergieanlage so verstellt werden können, dass der gesamte Windenergieanlagen-Rotor zum Stillstand gebracht wird und keinen wesentlichen Antrieb aus der Windenergie mehr erfährt, wobei jedes einzelne Rotorblatt auf einen gewünschen Anstellwinkel eingestellt bzw. eingeregelt werden kann, und wobei für jedes einzelne Rotorblatt ein jeweiliger Verstellmotor (A, B, C) vorgesehen ist, welcher über ein Relais (A', B', C') angesteuert wird und wobei zum Laden des Kondensatorspeichers im Normalbetrieb dieser mit einem Anschluss versehen ist, sodass der Kondensatorspeicher stets ausreichend Energie bereitstellt, um die Rotorblätter auf einen gewünschten Anstellwinkel einzustellen, falls dieses notwendig ist.

2. Verwendung eines Kondensatorspeichers als Notstromversorgungseinrichtung gemäss Anspruch 1, für Teile einer Windenergieanlage.

3. Verwendung nach einem der vorstehenden Ansprüche,
wobei die Kondensatorspeicher sehr klein sind und bevorzugt auch unmittelbar an den Verstellmotoren positioniert sind und insbesondere bevorzugt auch von diesen gehalten werden.

4. Verwendung nach einem der vorstehenden Ansprüche,
wobei die Kondensatorspeicher zusammen in einer Aufnahme positioniert sind.

5. Verwendung nach einem der vorstehenden Ansprüche,
wobei statt einzelner Kondensatorspeicher mehrere Kondensatorspeicher in Parallelschaltung vorgesehen sind.

6. Notstromversorgungseinheit einer Windenergieanlage unter Verwendung eines Kondensatorspeichers gemäss Anspruch 1, wobei mittels der Notstromversorgungseinheit ein einzelnes Rotorblatt der Windenergieanlage oder mehrere Rotorblätter der Windenergieanlage verstellbar sind, wobei für ein Rotorblatt ein Verstellmotor (a, b, c) vorgesehen ist und der Kondensatorspeicher (ca, cb, cc) während des Normalbetriebs der Windenergieanlage aufgeladen wird und am Verstellmotor eines Rotorblatts positioniert ist und der Kondensatorspeicher mit einer Einrichtung zur Regelung der Blattverstellung des Rotorblatts gekoppelt ist.

## Claims

1. Use of a capacitor store as an emergency power supply unit which has three rotor blades, the rotor blades of the wind turbine being able to be adjusted by means of the emergency power supply unit in such a manner that the entire wind turbine rotor is brought to a stop and is no longer subjected to significant drive from the wind energy, each individual rotor blade being able to be adjusted or reset to a desired angle of incidence and there being provided for each individual rotor blade a respective adjustment motor (A, B, C) which is controlled by means of a relay (A', B', C') and the capacitor store being provided with a connection for charging the capacitor store during normal operation so that the capacitor store constantly provides sufficient energy to adjust the rotor blades to a desired angle of incidence if this is required.

2. Use of a capacitor store as an emergency power supply device according to claim 1 for components of a wind turbine.

3. Use according to either of the preceding claims,
wherein the capacitor stores are very small and are preferably also positioned directly on the adjustment motors and are in particular preferably also retained by them.

4. Use according to any one of the preceding claims,
wherein the capacitor stores are positioned together in a receiving member.

5. Use according to any one of the preceding claims,
wherein a plurality of capacitor stores are provided in a parallel arrangement in place of individual capacitor stores.

6. Emergency power supply unit of a wind turbine using a capacitor store according to claim 1, wherein a single rotor blade of the wind turbine or a plurality of rotor blades of the wind turbine can be adjusted by means of the emergency power supply unit, an adjustment motor (a, b, c) being provided for a rotor blade and the capacitor store (ca, cb, cc) being charged during normal operation of the wind turbine and being positioned on the adjustment motor of a rotor blade and the capacitor store being coupled to a device for controlling the blade adjustment of the rotor blade.

## Revendications

1. Utilisation d'un condensateur accumulateur en tant qu'unité d'alimentation de secours d'une installation d'énergie éolienne qui comprend trois pales de rotor,
les pales de rotor de l'installation d'énergie éolienne pouvant être orientées au moyen de l'unité d'alimentation de secours de sorte que tout le rotor de l'installation d'énergie éolienne soit mis à l'arrêt et qu'il ne subisse plus aucun entraînement dû à l'énergie éolienne, chaque pale de rotor individuelle pouvant être réglée ou ajustée sur un angle d'attaque souhaité, et chaque pale de rotor individuelle disposant d'un moteur d'orientation particulier (A, B, C) qui est commandé par le biais d'un relais (A', B', C') et, pour la charge du condensateur accumulateur en régime normal, celui-ci étant doté d'un branchement de sorte que le condensateur accumulateur fournisse toujours suffisamment d'énergie pour régler les pales de rotor sur un angle d'attaque souhaité, si cela est nécessaire.

2. Utilisation d'un condensateur accumulateur en tant que dispositif d'alimentation de secours selon la revendication 1, pour des parties d'une installation d'énergie éolienne.

3. Utilisation selon l'une quelconque des revendications précédentes,
les condensateurs accumulateurs étant très petits et étant, de préférence, également positionnés directement sur les moteurs d'orientation et, de manière particulièrement préférée, étant également maintenus par ceux-ci.

4. Utilisation selon l'une quelconque des revendications précédentes,
les condensateurs accumulateurs étant positionnés ensemble dans un logement.

5. Utilisation selon l'une quelconque des revendications précédentes,
plusieurs condensateurs accumulateurs étant prévus dans un montage parallèle à la place de condensateurs accumulateurs individuels.

6. Unité d'alimentation de secours d'une installation d'énergie éolienne à l'aide d'un condensateur accumulateur selon la revendication 1, une pale de rotor individuelle de l'installation d'énergie éolienne ou plusieurs pales de rotor de l'installation d'énergie éolienne pouvant être orientées au moyen de l'unité d'alimentation de secours, chaque pale de rotor disposant d'un moteur d'orientation (a, b, c) et le condensateur accumulateur (ce, cb, cc) étant chargé durant le régime normal de l'installation d'énergie éolienne et étant positionné sur le moteur d'orientation d'une pale de rotor et le condensateur accumulateur étant couplé avec un dispositif pour la régulation de l'orientation de la pale de rotor.
